# EUROPÄISCHE PATENTSCHRIFT

(11) **EP 3 106 947 B1**
(45) Veröffentlichungstag und Bekanntmachung des Hinweises auf die Patenterteilung: **31.07.2019**
(21) Anmeldenummer: 15172946.4
(22) Anmeldetag: 19.06.2015
(51) Int. Cl.: G05B 19/418, B25J 9/00, B23P 21/00, B62D 65/00, B23Q 17/22

(54) **EINRICHTUNG UND VERFAHREN ZUR SYNCHRONISIERUNG DER BEWEGUNG EINES AUTOMATISCHEN BEARBEITUNGSMITTELS MIT DER BEWEGUNG EINES WERKSTÜCKS**
DEVICE AND METHOD FOR THE SYNCHRONISATION OF THE MOVEMENT OF AN AUTOMATIC PROCESSING TOOL WITH THE MOVEMENT OF A WORKPIECE
DISPOSITIF ET PROCEDE DE SYNCHRONISATION DU MOUVEMENT D'UN MOYEN DE TRAITEMENT AUTOMATIQUE AVEC LE MOUVEMENT D'UNE PIECE

(43) Veröffentlichungstag der Anmeldung: 21.12.2016
(73) Patentinhaber: Siemens Aktiengesellschaft, 80333 München (DE)
(72) Erfinder: Müller, Patrick, 07338 Drognitz (DE); Pechstein, Michael, 04571 Rötha (DE); Weidauer, Horst, 08141 Reinsdorf (DE); Ziermann, Horst, 07407 Rudolstadt (DE)

(56) Entgegenhaltungen:
- DE-A1- 4 021 330
- DE-A1- 4 338 223
- DE-A1-102012 020 971
- US-A- 4 799 581

## Beschreibung

Die Erfindung betrifft eine Einrichtung zur Synchronisierung der Bewegung eines automatischen Bearbeitungsmittels mit der Bewegung eines Werkstücks gemäß dem Oberbegriff des Patentanspruchs 1, und ein Verfahren zur Synchronisierung der Bewegung eines automatischen Bearbeitungsmittels mit der Bewegung eines Werkstücks gemäß dem Oberbegriff des Patentanspruchs 6.

In der Serienfertigung von Gütern ist es üblich, dass Werkstücke durch ein automatisches Bearbeitungsmittel, beispielsweise einen Roboter, bearbeitet werden, während die Werkstücke kontinuierlich gefördert (bewegt) werden, beispielsweise durch ein Fließband, Förderband oder dgl. In vielen Fällen ist das Bearbeitungsmittel, also beispielsweise ein Roboter oder ein Roboterarm, dabei stationär, d.h., dass der Roboter oder Roboterarm nicht mit dem Fördermittel bewegt wird, sondern vielmehr seine eigene Bewegung, also beispielsweise die Bewegung eines Roboterarms, der Bewegung des Werkstücks angleichen muss.

Beispielsweise ist es in der Automobilindustrie üblich, dass eine Rohkarosse auf einem Fördermittel, einem sog. Skid, kontinuierlich bewegt wird, wobei an verschiedenen Bearbeitungsstationen Roboter an der kontinuierlich bewegten Rohkarosse arbeiten. Die Bewegungen der Roboterarme folgen dabei im Wesentlichen der Bewegung der Rohkarosse möglichst synchron, um die jeweiligen Bearbeitungsschritte mit der notwendigen Präzision ausführen zu können. Die Bearbeitung von Werkstücken, die kontinuierlich bewegt werden, wird auch als "Fließbetrieb" oder "Fließfertigung" bezeichnet.

Damit die Bearbeitungsmittel der Bewegung bzw. der jeweiligen Position der Werkstücke synchron folgen können, werden in der Fließfertigung üblicher Weise laser- oder videobasierte Messverfahren eingesetzt, die kontinuierlich den Abstand eines Referenzpunktes des Werkstückes mit einem Referenzpunkt des Bearbeitungsmittels erfassen, so dass das Bearbeitungsmittel entsprechend nachgeführt, also "synchron" bewegt, werden kann. Solche laser- oder videobasierte Verfahren sind zum Einen aufwändig, und zum Anderen müssen die dabei gewonnenen Abstandsdaten in ein für das Bearbeitungsmittel (Robotersteuerung) geeignetes numerisches Signal umgerechnet werden, was Schnittstellenprobleme mit sich bringen kann.

Eine weitere Möglichkeit zur Lösung des Problems besteht in der direkten Berücksichtigung von Bewegungsinformationen bzw. Geschwindigkeitsinformationen des Fördermittels. Dazu kann beispielsweise eine Geschwindigkeitsinformation eines Förderers über eine numerische Schnittstelle bzw. einen Kanal in einem Automatisierungsnetzwerk an einen Roboter gemeldet werden. Dies kann aber zum Einen auch Probleme hinsichtlich der dafür erforderlichen Schnittstellen mit sich bringen, und zum Anderen wird bei diesem Vorgehen oft nicht die geforderte Genauigkeit und Reaktionszeit der Nachführbewegung des Bearbeitungsmittels erreicht.

Die Druckschrift DE 40 21 330 A1 - Milberg "Verfahren zum Betrieb eines Roboters und Vorrichtung dazu" zeigt eine Lösung, bei der die translatorische Relativbewegung eines Werkstücks zu einem Portalroboter im Feininterpolationstakt einer Lageregelkarte der Robotersteuerung eingespeist und dort berücksichtigt wird.

Es ist also eine Aufgabe der vorliegenden Erfindung, die Synchronisation der Bewegung eines Bearbeitungsmittels (z.B. Roboter) mit der Bewegung eines Werkstücks (z.B. Karosse im Automobilbau) im Fließbetrieb zu verbessern und dabei insbesondere eine Steuerung der Bearbeitungsmittel mit genauen und einfach zu verarbeitenden Positions- oder Bewegungsdaten zu versorgen.

Es ist eine Kernidee der erfindungsgemäßen Lösung dieser Aufgabe, einen Lagegeber bzw. einen sog. "Resolver" mechanisch mit dem bewegten Werkstück, beispielsweise einer Automobilkarosse, zu verbinden und das Signal des Lagegebers direkt als zusätzliche Achse in eine Steuerung des Bearbeitungsmittels (Roboter) einzuspeisen. Die dabei erfassten Weginformationen bzw. Positionsdaten können somit durch die Steuerung des Bearbeitungsmittels wie die Daten einer eigenen Roboterachse verarbeitet werden, wodurch zum Einen Schnittstellenprobleme vermieden werden können, und zum anderen eine sehr reaktionsschnelle und exakte Positionierung des Bearbeitungsmittels in Relation zum bewegten Werkstück erreicht werden kann.

Die Aufgabe wird insbesondere durch eine Einrichtung gemäß dem Patentanspruch 1 und durch ein Verfahren gemäß Patentanspruch 6 gelöst.

Dabei wird eine Einrichtung zur Synchronisierung der Bewegung eines automatischen Bearbeitungsmittels mit der Bewegung eines während der Bearbeitung relativ zum Bearbeitungsmittel geförderten Werkstücks vorgeschlagen, wobei das Bearbeitungsmittel zumindest eine numerische Steuerung zur Steuerung zumindest einer primären Achse aufweist, und wobei Synchronisierung einer Bearbeitungsposition des Bearbeitungsmittels kontinuierlich mit der jeweiligen Position des Werkstücks durch Nachführung der zumindest einen primären Achse vorgesehen ist. Dabei ist ein Lagegeber mechanisch an das Werkstück angekoppelt, wobei der Lagegeber mit der numerischen Steuerung verknüpft ist, und wobei die numerische Steuerung zur Verwendung des Signals des Lagegebers zur Synchronisierung der Bewegung der zumindest einen primären Achse mit der jeweiligen Position des Werkstückes eingerichtet ist. Mit einer solchen Einrichtung wird die Bewegung des Werkstücks über eine unmittelbare mechanische Kopplung in Bewegungsdaten umgesetzt, so dass die Bearbeitungsmittel sich unmittelbar mit dieser Bewegung synchronisieren können. Mechanische Abweichungen, die durch eine indirekte Messwerterfassung an der Fördertechnik (z.B. Fließband) entstehen, können vermieden werden. Eine solche Einrichtung kann auch zu hoch präzisen Montagearbeiten oder Bearbeitungsvorgängen an auch ungleichmäßig bewegten Werkstücken verwendet werden.

Die Aufgabe wird außerdem durch ein Verfahren zur Synchronisierung der Bewegung eines automatischen Bearbeitungsmittels mit der Bewegung eines während der Bearbeitung relativ zum Bearbeitungsmittel bewegten oder geförderten Werkstücks gelöst, wobei das Bearbeitungsmittel zumindest eine numerische Steuerung zur Steuerung zumindest einer primären Achse aufweist, und wobei eine Bearbeitungsposition des Bearbeitungsmittels kontinuierlich mit der jeweiligen Position des Werkstücks durch Nachführung der zumindest einen primären Achse synchronisiert wird. Dabei ist ein Lagegeber mechanisch an das Werkstück angekoppelt, wobei der Lagegeber mit der numerischen Steuerung verknüpft ist, und wobei die numerische Steuerung zur Verwendung des Signals des Lagegebers zur Synchronisierung der Bewegung der zumindest einen primären Achse mit der jeweiligen Position des Werkstückes eingerichtet ist. Durch dieses Verfahren können die bereits anhand der erfindungsgemäßen Einrichtung diskutierten Vorteile realisiert werden.

Erfindungsgemäß ist die numerische Steuerung zur Verarbeitung des Signals des Lagegebers als das Signal einer sekundären Achse des Bearbeitungsmittels eingerichtet, so dass das Bewegungssignal für das Werkstück unmittelbar und in demselben Format wie die entsprechenden Daten der Roboter-eigenen Achsen vorliegt. So können beispielsweise laufend aktualisierte Koordinaten für einen Referenzpunkt des Werkstücks in eine Sollpositionsberechnung des Bearbeitungsmittels bzw. der primären Achse(n) einfließen.

Vorteilhafte Ausgestaltungen der Erfindung sind in den abhängigen Patentansprüchen angegeben; die dabei beschriebenen Merkmale und Vorteile können sowohl einzeln, als auch in Kombination miteinander realisiert werden.

In einer vorteilhaften Ausgestaltung ist der Lagegeber eine Lineareinheit mit einem Resolver, so dass die in erster Näherung geradlinige Bewegung eines Werkstücks auf einem Fördermittel (Förderband, "Skid" oder dgl.) in ein eindimensionales numerisches Signal umgesetzt werden kann. Dabei umfasst der Resolver vorteilhaft einen Drehgeber, wobei eine Spindel des Lagegebers (Gewindespindel) oder eine funktionsgleiche Mechanik zur Umsetzung der translatorischen Bewegung des angekoppelten Werkstücks in eine rotatorische Bewegung zur Erfassung durch den Drehgeber vorgesehen ist. In weiteren vorteilhaften Ausgestaltungen ist der Lagegeber darüber hinaus mit Index-Sensoren oder anderen Absolutwertgebern ausgestattet, um eine Initialisierung des Systems zu ermöglichen, insbesondere nach Ankopplung eines neuen Werkstücks oder nach dem Start des Systems. Vorteilhaft werden damit die sog. Endlagen des Lagegebers (Lineareinheit) überwacht und erfasst.

Vorteilhaft weist der Lagegeber eine automatische Kopplungseinrichtung zum Ankoppeln des Lagegebers an das in einem jeweiligen Bearbeitungszyklus zu bearbeitende Werkstück auf. Dabei ist die Kopplungseinrichtung zum Zusammenwirken, insbesondere zum Einrasten oder Anlegen, an einen definierten Kopplungspunkt der Werkstücke eingerichtet. Dieser Kopplungspunkt ist vorteilhaft entweder ein Referenzpunkt des Werkstücks, oder zumindest stehen der Steuerung Informationen über die relative Lage des Kopplungspunktes zu einem solchen Referenzpunkt des Werkstücks zur Verfügung, so dass im angekoppelten Zustand stets genaue absolute Positionsdaten des Werkstücks oder des gewünschten Bearbeitungspunktes zur Verfügung stehen.

In einer vorteilhaften Ausgestaltung ist der Lagegeber mit einer - möglichst automatischen - Rückführeinrichtung zur Bewegung der Kopplungseinrichtung des Lagegebers zurück in eine Startposition für einen weiteren Bearbeitungszyklus ausgestattet. Vorteilhaft kann die Rückführeinrichtung einen Elektromotor umfassen, der auf dieselbe Gewindespindel wirkt, mit der auch die Linearbewegung der Kopplungseinrichtung in die Drehbewegung für den Drehgeber bzw. Resolver umgesetzt wird. Die Rückführeinrichtung weist vorteilhaft eine Kupplung auf, um zu verhindern, dass im Schleppbetrieb der Motor der Rückführeinrichtung ständig mitbewegt werden muss. In einer besonders vorteilhaften Ausgestaltung wird die Rückführeinrichtung durch die Steuerung des Bearbeitungsmittels (Roboter) angesteuert, so dass die in einer vorteilhaften Ausgestaltung vorgesehenen Index-Einrichtungen (z.B. Lagegeber der Endlagen) der Lineareinheit auch bei der Rückführung des Kopplungsmittels berücksichtigt werden können; alternativ kann die Rückführeinrichtung auch eine eigene Steuerung aufweisen, mit entsprechenden Sensoren, die ein zuverlässiges Ankoppeln an dem nächsten zu bearbeitenden Werkstück gewährleisten. Zudem ist das Kopplungsmittel vorteilhaft mit einer mechanischen Fangeinrichtung ausgestattet, die beim Herannahen des nächsten Werkstücks ein automatisches Einrasten an dem Kopplungspunkt dieses Werkstücks gewährleistet.

Ein Ausführungsbeispiel der erfindungsgemäßen Einrichtung und des erfindungsgemäßen Verfahrens wird nachfolgend anhand der Zeichnungen erläutert.

Dabei zeigen:
- Figur 1: in einer stark vereinfachten, schematischen Darstellung eine Anordnung aus einem Bearbeitungsmittel, einem Werkstück und einem Lagegeber, und
- Figur 2: einen erfindungsgemäßen Lagegeber mit einer Rückführeinrichtung, einem Drehgeber, einer Gewindespindel und einer Kopplungseinrichtung.

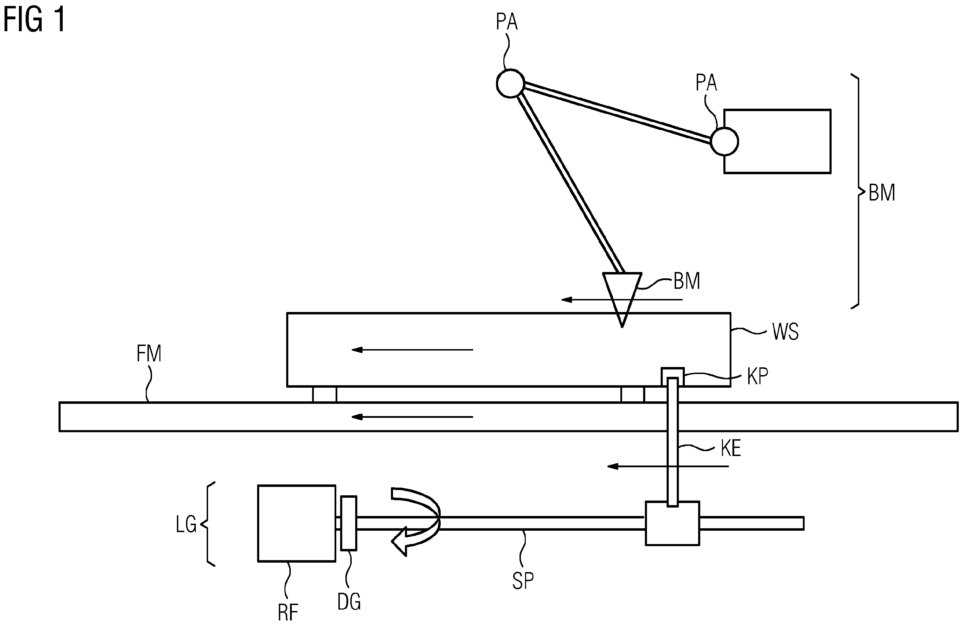

In der Figur 1 ist als Bearbeitungsmittel BM ein Roboter mit einem Roboterarm dargestellt, wobei in dieser stark vereinfachten schematischen Darstellung der Roboter über zwei sog. primäre Achsen PA verfügt; reale Roboter, die beispielsweise in der industriellen Kraftfahrzeugfertigung eingesetzt werden, haben in der Regel acht oder mehr unabhängige Achsen. Das Bearbeitungsmittel BM dient dabei der Bearbeitung eines Werkstücks WS, beispielsweise eine Kraftfahrzeug-Rohkarosse. Eine Bearbeitungstätigkeit kann dabei beispielsweise die Montage einer Tür, die Vornahme einer Schweißverbindung oder dgl. sein. Das Werkstück WS wird mit einem Fördermittel FM bewegt, im vorliegenden Beispiel nach links, was durch Pfeile angedeutet wird. Das Fördermittel kann beispielsweise ein Förderband oder ein fahrbares Bearbeitungsmodul, ein sog. "Skid", sein. Das Werkstück WS weist einen Kopplungspunkt KP auf, beispielsweise eine definierte Vertiefung am Fahrzeugboden einer Rohkarosse. Während eines Berabeitungszyklus' des Bearbeitungsmittels BM ist daran eine Kopplungseinrichtung KE des Lagegebers LG angekoppelt. Die Kopplungseinrichtung KE kann beispielsweise ein automatisch ankoppelnder, stiftförmiger Mitnehmer sein, der an einer entsprechend ausgearbeiteten Vertiefung des Kopplungspunktes KP einrastet. Mit der Bewegung des Werkstücks WS wird die Kopplungseinrichtung KE mitgeschleppt, was ebenfalls durch einen Pfeil angedeutet wird. Die Linearbewegung der Kopplungseinrichtung KE wird durch eine Gewindespindel SP in eine Drehbewegung umgesetzt, die durch einen Drehgeber DG (Resolver) in ein analoges (z.B. Quadratursignal) oder digitales Signal (z.B. Impulse) umgesetzt wird, welches der Steuerung des Bearbeitungsmittels BM zugeführt wird. Die Steuerung des Bearbeitungsmittels BM weist dazu eine Interface-Einheit auf, an der auch alle primären Achsen PA, also alle Drehgeber oder Lineargeber des Bearbeitungsmittels BM, also der Roboterachsen, angeschlossen sind. Auf einem Kanal der Interface-Einheit, der hier auch als "sekundäre Achse" bezeichnet werden soll, ist der Drehgeber DG des Lagegebers LG angeschlossen.

Der Lagegeber LG ist mit einer Rückführeinrichtung RF ausgestattet, die nach der erfolgten Bearbeitung des Werkstücks WS durch das Bearbeitungsmittel BM bzw. nach Abschluss des gegenwärtigen Bearbeitungszyklus' die - bezogen auf die Darstellung in der Figur 1 - nach links bewegte Kopplungseinrichtung durch Zurückdrehen der Gewindespindel SP wieder an das rechte Ende der Gewindespindel SP zurückbewegt, damit dort das nächste zu bearbeitende Werkstück WS angekoppelt werden kann. In der hier dargestellten Version ist der Drehgeber DG fest mit der Gewindespindel SP verknüpft, wogegen die Rückführeinrichtung RF eine (nicht dargestellte) Kupplung zum Ankoppeln an die Gewindespindel SP aufweist. Somit ist ein Antrieb der Rückführeinrichtung RF nur für die Dauer der Rückführung mit der Gewindespindel SP verbunden, die ansonsten - geschleppt mittels der Kopplungseinrichtung KE - frei drehen kann. Jedoch sind auch andere Konstruktionen möglich, beispielsweise eine Integration des Drehgebers DG in die Rückführeinrichtung RF, wobei dann jedoch ein Abkuppeln der Rückführeinrichtung RF während der Bearbeitung des Werkstücks WS nicht mehr sinnvoll ist.

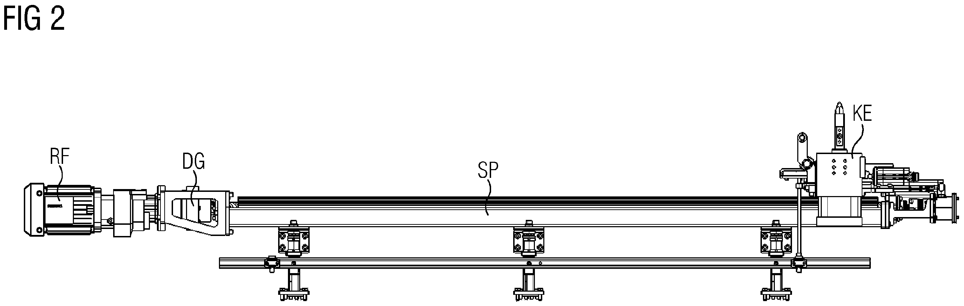

In der Figur 2 ist eine Konstruktionszeichnung der erfindungsgemäßen Einrichtung, also des erfindungsgemäßen Lagegebers LG, dargestellt. Dabei ist im unteren Bereich eine zusätzliche Traverse gezeigt, an der Index-Lagegeber bzw. Sensoren angebaut werden können, mit denen beispielsweise die Endlagen der Lineareinheit erfasst werden können.

Durch die zuvor beschriebene Einrichtung erfolgt die Synchronisierung zwischen der Förderbewegung des Werkstücks WS, also einer Fahrzeugkarosse o.ä., mit der Bewegung eines Bearbeitungsmittels BM, beispielsweise einem Montageroboter, durch eine direkte Einspeisung eines Bewegungssignals der Bewegung des Werkstücks WS (und nicht etwa des Fördermittels FM) in die Steuerung des Bearbeitungsmittels BM. Dazu werden die Werkstücke WS, beispielsweise die Karossen, an einem Referenzpunkt mechanisch "abgesteckt", d.h., direkt mechanisch mit einem Lagegeber (Lineareinheit) verbunden. Der Aufnehmer der Lineareinheit wird dann direkt durch das Werkstück WS in Förderrichtung synchron zur Fördergeschwindigkeit mitbewegt. Innerhalb der Lineareinheit, also dem linearen Lagegeber LG, wird die lineare Vorschubbewegung über einen Gewindetrieb (Gewindespindel SP) in eine rotatorische Bewegung umgewandelt und mittels eines Resolvers oder dgl. in ein analoges oder digitales Bewegungssignal (z.B. Impuls- oder Quadratursignal) umgesetzt, welches auch in gleicher Form an den sonstigen Roboter-Achsen (hier auch als primäre Achsen PA bezeichnet) erzeugt wird. Während der gesamten Montageoperation liefert also der Drehgeber DG bzw. der Resolver die Bewegungsdaten des Werkstücks WS (Rohkarosse) direkt an die Steuerung des Bearbeitungsmittels BM (Roboter-Steuerung) und steht dort direkt als Signal einer weiteren "eigenen" Achse zur Verfügung.

Mit der hier vorgestellten Lösung werden also die Bewegungsdaten über eine unmittelbar mechanische Kopplung der Karossen oder Werkstücke WS zu den Montage-Robotern "synchronisiert". Mechanische Abweichungen, die durch indirekte Messwerterfassung an der Fördertechnik entstehen können, werden somit zuverlässig vermieden. Die Weginformationen des Resolvers an der verfahrbaren Absteckeinheit (Kopplungseinrichtung KE) werden von der Roboter-Steuerung genau wie die Daten einer eigenen Roboterachse verarbeitet, wodurch zeitaufwändige Umrechnungen und Abweichungen durch Rundungen etc. vermieden werden. Dadurch, dass keine numerischen Schnittstellen benutzt werden müssen, sondern die für die Roboter-Steuerung ohnehin gebräuchlichen digitalen oder analogen Zähler-(Resolver) oder Quadratur-Signalaufnehmer verwendet werden können, werden weiterhin Schnittstellenprobleme zwischen der Messtechnik und der Roboter-Steuerung vermieden.

## Patentansprüche

1. Einrichtung zur Synchronisierung der Bewegung eines automatischen Bearbeitungsmittels (BM) mit der Bewegung eines während der Bearbeitung relativ zum Bearbeitungsmittel (BM) geförderten Werkstücks (WS),
wobei das Bearbeitungsmittel (BM) zumindest eine numerische Steuerung zur Steuerung zumindest einer primären Achse (PA) aufweist,
wobei Synchronisierung einer Bearbeitungsposition des Bearbeitungsmittels (BM) kontinuierlich mit der jeweiligen Position des Werkstücks (WS) durch Nachführung der zumindest einen primären Achse (PA) vorgesehen ist,
wobei ein Lagegeber (LG) mechanisch an das Werkstück (WS) angekoppelt ist,
dass der Lagegeber (LG) mit der numerischen Steuerung verknüpft ist, und
wobei die numerische Steuerung zur Verwendung des Signals des Lagegebers (LG) zur Synchronisierung der Bewegung der zumindest einen primären Achse (PA) mit der jeweiligen Position des Werkstückes (WS) eingerichtet ist
**dadurch gekennzeichnet,**
**dass** die numerische Steuerung zur Verarbeitung des Signals des Lagegebers (LG) als das Signal einer sekundären Achse (PA) des Bearbeitungsmittels (BM) eingerichtet ist.

2. Einrichtung nach Patentanspruch 1,
**dadurch gekennzeichnet,**
**dass** der Lagegeber (LG) eine Lineareinheit mit einem Resolver ist.

3. Einrichtung nach Patentanspruch 2,
**dadurch gekennzeichnet,**
**dass** der Resolver einen Drehgeber (DG) umfasst, wobei eine Spindel (SP) des Lagegebers (LG) zur Umsetzung einer translatorischen Bewegung des angekoppelten Werkstücks (WS) in eine rotatorische Bewegung zur Erfassung durch den Drehgeber (DG) aufweist.

4. Einrichtung nach einem der vorhergehenden Patentansprüche,
**dadurch gekennzeichnet,**
**dass** der Lagegeber (LG) eine automatische Kopplungseinrichtung (KE) zum Ankoppeln des Lagegebers (LG) an das in einem jeweiligen Bearbeitungszyklus zu bearbeitende Werkstück (WS) aufweist.

5. Einrichtung nach Patentanspruch 4,
**dadurch gekennzeichnet,**
**dass** der Lagegeber (LG) eine Rückführeinrichtung (RF) zur Bewegung der Kopplungseinrichtung (KE) des Lagegebers (LG) in eine Startposition für einen weiteren Bearbeitungszyklus aufweist.

6. Verfahren zur Synchronisierung der Bewegung eines automatischen Bearbeitungsmittels (BM) mit der Bewegung eines während der Bearbeitung relativ zum Bearbeitungsmittel (BM) geförderten Werkstücks (WS),
wobei das Bearbeitungsmittel (BM) zumindest eine numerische Steuerung zur Steuerung zumindest einer primären Achse (PA) aufweist,
wobei eine Bearbeitungsposition des Bearbeitungsmittels (BM) kontinuierlich mit der jeweiligen Position des Werkstücks (WS) durch Nachführung der zumindest einen primären Achse (PA) synchronisiert wird,
wobei ein Lagegeber (LG) mechanisch an das Werkstück (WS) angekoppelt wird,
dass der Lagegeber (LG) mit der numerischen Steuerung verknüpft ist, und
wobei durch die numerische Steuerung das Signal des Lagegebers (LG) zur Synchronisierung der Bewegung der zumindest einen primären Achse (PA) mit der jeweiligen Position des Werkstückes (WS) verwendet wird
**dadurch gekennzeichnet,**
**dass** durch die numerische Steuerung das Signal des Lagegebers (LG) als das Signal einer sekundären Achse des Bearbeitungsmittels (BM) verarbeitet wird.

7. Verfahren zur Synchronisierung nach Patentanspruch 6,
**dadurch gekennzeichnet,**
**dass** als der Lagegeber (LG) eine Lineareinheit mit einem Resolver verwendet wird.

8. Verfahren zur Synchronisierung nach Patentanspruch 7,
**dadurch gekennzeichnet,**
**dass** der Resolver einen Drehgeber (DG) umfasst, wobei durch eine Spindel (SP) des Lagegebers (LG) eine Umsetzung einer translatorischen Bewegung des angekoppelten Werkstücks (WS) in eine rotatorische Bewegung zur Erfassung durch den Drehgeber (DG) erfolgt.

9. Verfahren zur Synchronisierung nach einem der Patentansprüche 6 bis 8,
**dadurch gekennzeichnet,**
**dass** der Lagegeber (LG) mittels einer automatischen Kopplungseinrichtung (KE) ein Ankoppeln des Lagegebers (LG) an das in einem jeweiligen Bearbeitungszyklus zu bearbeitende Werkstück (WS) durchführt.

10. Verfahren zur Synchronisierung nach Patentanspruch 9,
**dadurch gekennzeichnet,**
**dass** der Lagegeber (LG) eine Rückführeinrichtung (RF) zur Bewegung der Kopplungseinrichtung (KE) des Lagegebers (LG) in eine Startposition für einen weiteren Bearbeitungszyklus verwendet.

## Claims

1. Device for the synchronization of the movement of an automatic processing tool (BM) with the movement of a workpiece (WS) conveyed relative to the processing tool (BM) during the processing,
the processing tool (BM) having at least one numeric control system for controlling at least one primary axis (PA),
synchronization of a processing position of the processing tool (BM) continuously with the respective position of the workpiece (WS) by tracking the at least one primary axis (PA) being provided,
a position transmitter (LG) being coupled mechanically to the workpiece (WS),
the position transmitter (LG) being linked to the numeric control system, and
the numeric control system being configured to use the signal from the position transmitter (LG) for the synchronization of the movement of the at least one primary axis (PA) with the respective position of the workpiece (WS),
**characterized in that**
the numeric control system is configured to process the signal from the position transmitter (LG) as the signal from a secondary axis (PA) of the processing tool (BM).

2. Device according to Patent Claim 1,
**characterized in that**
the position transmitter (LG) is a linear unit with a resolver.

3. Device according to Patent Claim 2,
**characterized in that**
the resolver comprises a rotary encoder (DG), a spindle (SP) of the position transmitter (LG) being provided for converting a translational movement of the coupled workpiece (WS) into a rotational movement for detection by the rotary encoder (DG).

4. Device according to one of the preceding patent claims,
**characterized in that**
the position transmitter (LG) has an automatic coupling device (KE) for coupling the position transmitter (LG) to the workpiece (WS) to be processed in a respective processing cycle.

5. Device according to Patent Claim 4,
**characterized in that**
the position transmitter (LG) has a restoring device (RF) for moving the coupling device (KE) of the position transmitter (LG) into a starting position for a further processing cycle.

6. Method for the synchronization of the movement of an automatic processing tool (BM) with the movement of a workpiece (WS) conveyed relative to the processing tool (BM) during the processing,
the processing tool (BM) having at least one numeric control system for controlling at least one primary axis (PA),
a processing position of the processing tool (BM) being synchronized continuously with the respective position of the workpiece (WS) by tracking the at least one primary axis (PA),
a position transmitter (LG) being coupled mechanically to the workpiece (WS),
the position transmitter (LG) being linked to the numeric control system, and
the signal from the position transmitter (LG) being used by the numeric control system to synchronize the movement of the at least one primary axis (PA) with the respective position of the workpiece (WS),
**characterized in that**
the signal from the position transmitter (LG) is processed by the numeric control system as the signal from a secondary axis of the processing tool (BM).

7. Method for synchronization according to Patent Claim 6,
**characterized in that**
a linear unit having a resolver is used as the position transmitter (LG).

8. Method for synchronization according to Patent Claim 7,
**characterized in that**
the resolver comprises a rotary encoder (DG), wherein, by means of a spindle (SP) of the position transmitter (LG), a conversion of a translational movement of the coupled workpiece (WS) into a rotational movement for detection by the rotary encoder (DG) is carried out.

9. Method for synchronization according to one of Patent Claims 6 to 8,
**characterized in that**
by means of an automatic coupling device (KE), the position transmitter (LG) couples the position transmitter (LG) to the workpiece (WS) to be processed in a respective processing cycle.

10. Method for synchronization according to Patent Claim 9,
**characterized in that**
the position transmitter (LG) uses a restoring device (RF) for moving the coupling device (KE) of the position transmitter (LG) into a starting position for a further processing cycle.

## Revendications

1. Dispositif de synchronisation du mouvement d'un moyen (BM) automatique d'usinage au mouvement d'une pièce (WS) transportée pendant l'usinage par rapport au moyen (BM) d'usinage,
dans lequel le moyen (BM) d'usinage a au moins une commande numérique pour commander au moins un axe (PA) primaire,
dans lequel il est prévu une synchronisation d'une position d'usinage du moyen (BM) d'usinage, continuellement, avec la position respective de la pièce (WS) par suivi du au moins un axe (PA) primaire,
dans lequel un capteur (LG) de position est accouplé mécaniquement à la pièce (WS),
en ce que le capteur (LG) de position est combiné à la commande numérique et
dans lequel la commande numérique est conçue pour utiliser le signal du capteur (LG) de position, afin de synchroniser le mouvement du au moins un axe (PA) primaire à la position respective de la pièce (WS),
**caractérisé,**
**en ce que** la commande numérique est conçue pour traiter le signal du capteur (LG) de position comme signal d'un axe (PA) secondaire du moyen (BM) d'usinage.

2. Dispositif suivant la revendication 1,
**caractérisé**
**en ce que** le capteur (LG) de position est une unité linéaire ayant un résolveur.

3. Dispositif suivant la revendication 2,
**caractérisé**
**en ce que** le résolveur comprend un capteur (DG) de rotation, une broche (SP) du capteur (LG) de position, ayant, pour la détection par le capteur (DG) de rotation, un dispositif de transformation d'un mouvement de translation de la pièce (WS) accouplée en un mouvement de rotation.

4. Dispositif suivant l'une des revendications précédentes,
**caractérisé**
**en ce que** le capteur (LG) de position a un dispositif (KE) automatique d'accouplement pour accoupler le capteur (LG) de position à la pièce (WS) à usiner dans un cycle d'usinage respectif.

5. Dispositif suivant la revendication 4,
**caractérisé**
**en ce que** le capteur (LG) de position a un dispositif (RF) de retour pour mettre le dispositif (KE) d'accouplement du capteur (LG) de position dans une position de départ pour un autre cycle d'usinage.

6. Procédé de synchronisation du mouvement d'un moyen (BM) automatique d'usinage au mouvement d'une pièce (WS) transportée pendant l'usinage par rapport au moyen (BM) d'usinage,
dans lequel le moyen (BM) d'usinage a au moins une commande numérique pour commander au moins un axe (PA) primaire,
dans lequel on synchronise, par suivi du au moins un axe (PA) primaire, une position d'usinage du moyen (BM) d'usinage, en continu, à la position respective de la pièce (WS),
dans lequel on accouple un capteur (LG) de position mécaniquement à la pièce (WS),
en ce que l'on combine le capteur (LG) de position à la commande numérique et
dans lequel, dans la commande numérique, on utilise le signal du capteur (LG) de position pour synchroniser le mouvement du au moins un axe (PA) primaire à la position respective de la pièce (WS),
**caractérisé**
**en ce que** l'on traite, par la commande numérique, le signal du capteur (LG) de position, comme signal d'un axe secondaire du moyen (BM) d'usinage.

7. Procédé de synchronisation suivant la revendication 6,
**caractérisé**
**en ce que** l'on utilise, comme capteur (LG) de position, une unité linéaire ayant un résolveur.

8. Procédé de synchronisation suivant la revendication 7,
**caractérisé**
**en ce que** le résolveur a un capteur (DG) de rotation, dans lequel, par une broche (SP) du capteur (LG) de position, a lieu, pour la détection par le capteur (DG) de rotation, une transformation d'un mouvement de translation de la pièce (WS) accouplée en un mouvement de rotation.

9. Procédé de synchronisation suivant l'une des revendications 6 à 8,
**caractérisé**
**en ce que** le capteur (LG) de position effectue, au moyen d'un dispositif (KE) automatique d'accouplement, un accouplement du capteur (LG) de position à la pièce (WS) à usiner dans un cycle d'usinage respectif.

10. Procédé de synchronisation suivant la revendication 9,
**caractérisé**
**en ce que** le capteur (LG) de position utilise un dispositif (RF) de retour pour mettre le dispositif (KE) d'accouplement du capteur (LG) de position dans une position de départ pour un autre cycle d'usinage.
